# EUROPEAN PATENT APPLICATION

(11) **EP 4 800 320 A1**
(43) Date of publication of application: **02.09.2026**
(21) Application number: 26160903.6
(22) Date of filing: 26.02.2026
(51) Int. Cl.: F24S 25/63, F24S 25/634, F16B 2/24, F24S 30/425, H02S 30/00

(54) **SOLAR PANEL MOUNTING CLIP**

(30) Priority: 27.02.2025 US 202563764154 P; 20.02.2026 US 202619545545
(71) Applicant: Newfrey LLC, New Britain, CT 06053 (US)
(72) Inventor: DIEP, Tien T., West Bloomfield Township, MI, 48324 (US); SAFRY, Oday Amer, Farmington Hills, MI, 48334 (US); SANTAPURI, Kranthi, Troy, MI, 48084 (US); JACOBS, Terry G., Portland, IN, 47371 (US)
(74) Representative: Witte, Weller & Partner Patentanwälte mbB

(57) **Abstract**

A clip for a mounting assembly of a solar panel includes an elongated body and a flexible tab. The flexible tab extends from the elongated body. The flexible tab is configured to elastically deform from a relaxed position to a flexed position in response to a force. The flexible tab is configured to automatically return to the relaxed position absent the force.

## Description

### CROSS-REFERENCE TO RELATED APPLICATIONS

This application claims the benefit of U.S. Provisional Application No. 63/764,154, filed on February 27, 2025.

### FIELD

The present disclosure relates to a clip for a solar panel mounting assembly.

### BACKGROUND

This section provides background information related to the present disclosure which is not necessarily prior art.

Solar panels are coupled to support structures using mounting assemblies. Such mounting assemblies may include a panel bracket coupled to the solar panel and a carrier bracket coupled to the support structure. Support structures may include a rotatable horizontal support operatively coupled to a motor to pivot the solar panel, such as to track a position of the sun.

During installation, the solar panel having the panel bracket coupled thereto is moved to a location of the support structure and carrier bracket by operators. The operators couple the panel bracket to the carrier bracket by aligning respective apertures of the panel and carrier brackets and then inserting a discrete fastener, such as a wedge or stake, into the apertures using a tool, such as a rubber mallet. The process is repeated for a plurality of aligned apertures.

The installation process is time-consuming and requires multiple operators, precision alignment, and discrete components and tools. Thus, a need exists for a mounting assembly that can be quickly installed while reducing additional components, discrete tools, and operator time.

### SUMMARY

This section provides a general summary of the disclosure, and is not a comprehensive disclosure of its full scope or all of its features.

At least one example embodiment relates to a clip for a mounting assembly of a solar panel.

In at least one example embodiment, the clip includes an elongated body and a flexible tab. The flexible tab extends from the elongated body. The flexible tab is configured to elastically deform from a relaxed position to a flexed position in response to a force. The flexible tab is configured to automatically return to the relaxed position absent the force.

In at least one example embodiment, the elongated body includes a central wall and a pair of side walls. The central wall defines an opening. The flexible tab extends at least partially into the opening. The pair of side walls extends from opposite sides of the central wall.

In at least one example embodiment, the clip further includes a pair of stops tabs extending from the pair of side walls, respectively.

In at least one example embodiment, the stop tabs extend perpendicular to the one of the side walls.

In at least one example embodiment, each side wall of the pair of side walls extends perpendicular to the central wall.

In at least one example embodiment, the flexible tab is configured to pivot in a first direction from the relaxed position to the flexed position in response to the force. In the relaxed position, the clip defines a height parallel to the first direction. In the relaxed position, the flexible tab extends a distance beyond the central wall in a second direction opposite the first direction. The distance is greater than or equal to 30% of the height.

In at least one example embodiment, the flexible tab includes a stop wall configured to engage a bracket of the mounting assembly to prevent movement of the clip in a direction parallel to a longitudinal axis of the clip.

In at least one example embodiment, the flexible tab extends between a fixed end and a free end. The flexible tab further includes a ramp wall and a flange. The flange is between the stop wall and the free end along the longitudinal axis. The ramp wall is between the fixed end and the stop wall along the longitudinal axis. The stop wall is between the ramp wall and the flange along the longitudinal axis.

In at least one example embodiment, the ramp wall includes a contact surface configured to slide along the bracket of the mounting assembly. The contact surface is nonplanar.

In at least one example embodiment, at least a portion of the contact surface of the ramp wall is curved.

In at least one example embodiment, the contact surface includes a first portion defining a first slope with respect to the longitudinal axis when the flexible tab is in the relaxed position. The contact surface includes a second portion defining a second slope with respect to the longitudinal axis when the flexible tab is in the relaxed position. The second slope is different than the first slope.

In at least one example embodiment, the clip has a single-piece, unitary structure. The clip includes steel.

In at least one example embodiment, the elongated body defines a tapered nose.

In at least one example embodiment, the clip defines a first length parallel to a longitudinal axis of the clip. The flexible tab defines a second length parallel to the longitudinal axis. The second length is greater than or equal to 35% of the first length.

At least one example embodiment relates to a mounting assembly for a solar panel.

In at least one example embodiment, the mounting assembly includes a first bracket, a second bracket, and the clip. The first bracket is configured to be coupled to a solar panel. The first bracket includes a first pair of side walls defining a pair of first apertures, respectively. The second bracket is configured to be coupled to a field assembly. The second bracket includes a second pair of side walls defining a pair of second apertures, respectively. The second pair of side walls at least partially defines an interior bracket region in which the first bracket is at least partially disposed. The clip extends through the pair of first apertures and the pair of second apertures to couple the first bracket to the second bracket. At least a portion of the flexible tab is disposed in the interior bracket region. The flexible tab is configured to engage the first bracket to prevent movement of the clip with respect to the first bracket and the second bracket.

In at least one example embodiment, a first side wall of the first pair of side walls is directly between the flexible tab and a second side wall of the second pair of side walls. The second side wall is directly between the first side wall and a stop tab of the clip.

In at least one example embodiment, the flexible tab includes a flange. The flange is accessible from an exterior of the mounting assembly.

At least one example embodiment relates to a clip for a mounting assembly of a solar panel.

In at least one example embodiment, a clip for a mounting assembly of a solar panel includes a base wall, a pair of side walls, and a flexible tab. The pair of side walls extends from the base wall in a first direction. The flexible tab is configured to pivot with respect to the base wall between a relaxed position and a flexed position. In the relaxed position, a first portion of the flexible tab is disposed in the first direction with respect to the base wall and a second portion of the flexible tab is disposed in a second direction with respect to the base wall. The second direction is opposite the first direction.

At least one example embodiment relates to a method of assembling a mounting assembly for a solar panel.

In at least one example embodiment, the method includes aligning a pair of first apertures of a first bracket with a pair of second apertures of a second bracket. The first bracket is at least partially inside the second bracket. The method further includes translating a clip in a first direction such that an elongated body of the clip extends through the pair of first apertures and the pair of second apertures. The translating causes a flexible tab of the clip to pivot from a relaxed position to a flexed position, and automatically return to the relaxed position when the clip is in an installed position.

In at least one example embodiment, the translating is performed by applying a force to the clip in the first direction. The force is less than or equal to 55 Newtons.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is a perspective view of a solar panel assembly according to at least one example embodiment.
FIG. 2 is a partial perspective view of a mounting assembly of the solar panel assembly of FIG. 1 according to at least one example embodiment.
FIGS. 3A-3B are perspective views of a clip of the mounting assembly of FIG. 2 according to at least one example embodiment. FIG. 3A is a top perspective view. FIG. 3B is a bottom perspective view.
FIG. 4A is a sectional view of the clip of FIGS. 3A-3B according to at least one example embodiment. FIG 4B is a detail sectional view of a flexible tab of the clip of FIG. 4A.
FIGS. 5A-5C are sectional views of a mounting assembly showing different stages of installation of the clip of FIGS. 3A-3B according to at least one example embodiment. FIG. 5A shows the clip in a pre-installed position. FIG. 5B shows the clip in an intermediate position. FIG. 5C shows the clip in an installed position.

Corresponding reference numerals indicate corresponding parts throughout the several views of the drawings.

### DETAILED DESCRIPTION

Example embodiments will now be described more fully with reference to the accompanying drawings.

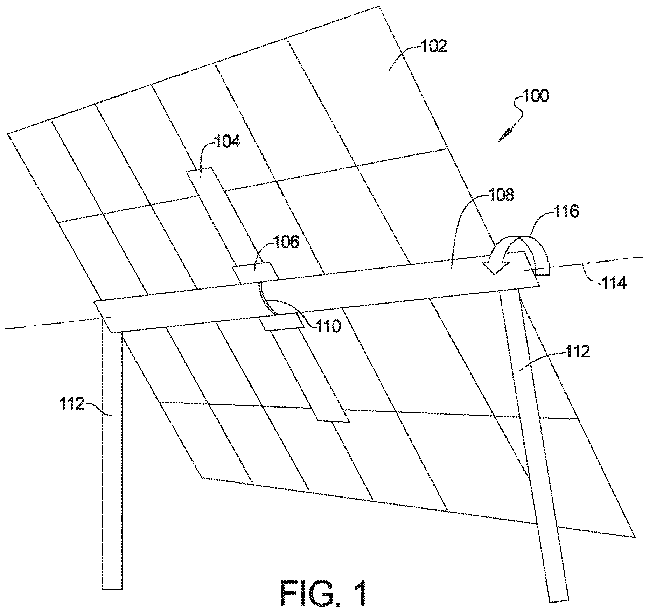

FIG. 1 is a perspective view of a solar panel assembly according to at least one example embodiment.

In at least one example embodiment, as shown in FIG. 1, a solar panel assembly 100 includes a solar panel 102. The solar panel assembly 100 may be configured to rotate the solar panel 102 to track a location of the sun so as to maximize an amount of light absorbed by the solar panel 102. The solar panel 102 is coupled to a first or panel bracket 104. The panel bracket 104 is coupled to a second or carrier bracket 106, as will be described in greater detail below. The carrier bracket 106 is coupled to a horizontal support 108, such as by a strap 110.

The horizontal support 108 may be rotatably coupled to vertical supports 112. The horizontal support 108 may be operatively coupled to a motor (not shown). The motor may be configured to rotate or pivot the horizontal support 108 about a tracking axis 114. The solar panel 102 is configured to rotate together with the horizontal support 108, as shown by the arrow 116.

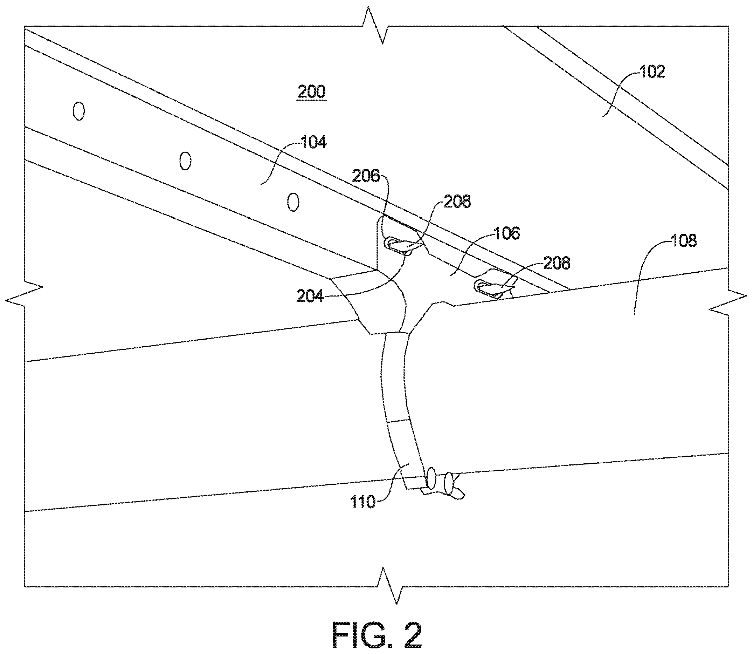

FIG. 2 is a partial perspective view of a mounting assembly of the solar panel assembly of FIG. 1 according to at least one example embodiment.

In at least one example embodiment, as shown in FIG. 2, the panel bracket 104 is coupled to an underside surface 200 of the solar panel 102. The panel bracket 104 may be directly fixed to the solar panel 102, such as by an adhesive (not shown).

The panel bracket 104 includes one or more first apertures 204 (e.g., two pairs of first apertures 204). The carrier bracket 106 includes one or more second apertures 206 (e.g., two pairs of second apertures 206). The panel bracket 104 is coupled to the carrier bracket 106 by one or more clips 208, as will be described in greater detail below. Collectively, the panel bracket 104, the carrier bracket 106, and the clips 208 may be referred to as a mounting assembly. When the mounting assembly is in an installed state, the respective first and second apertures 204, 206 are aligned and the clips 208 extend through the apertures 204, 206.

The carrier bracket 106 is coupled to the horizontal support 108 by the strap 110. In at least the example embodiment shown, the horizontal support 108 is a tube.

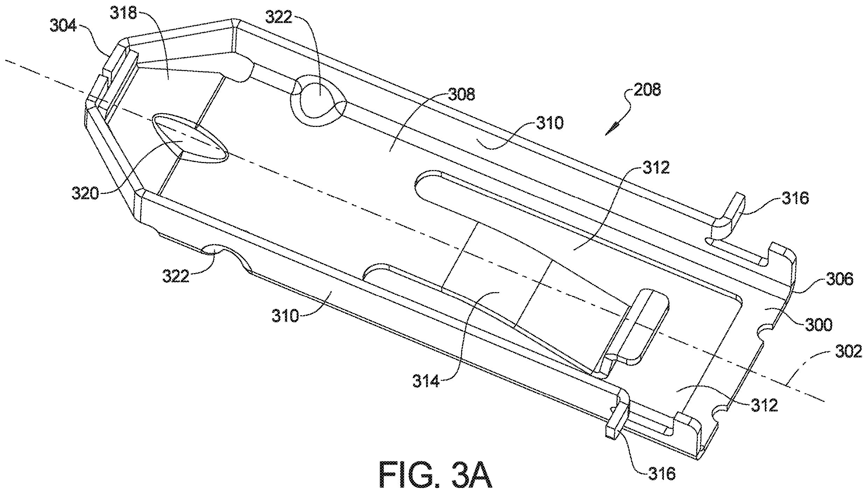

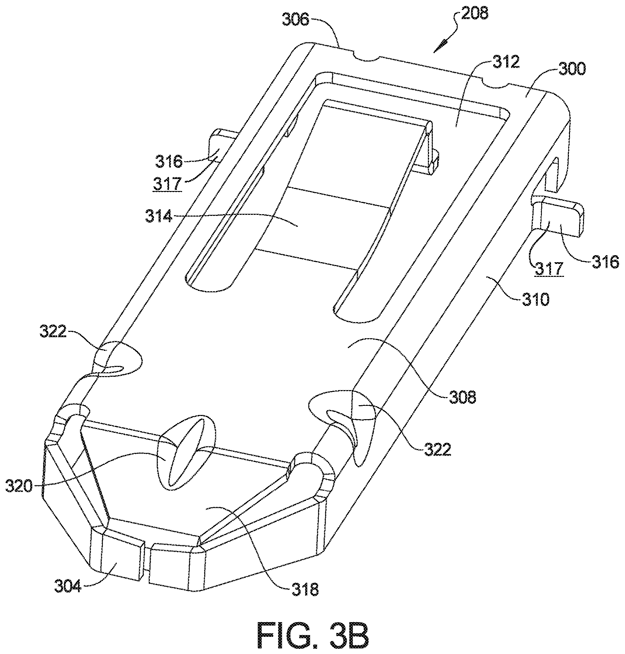

FIGS. 3A-3B are perspective views of a clip of the mounting assembly of FIG. 2 according to at least one example embodiment. FIG. 3A is a bottom perspective view. FIG. 3B is a top perspective view.

In at least one example embodiment, as shown in FIGS. 3A-3B, the clip 208 may have a single-piece, unitary, elongated body 300. The body 300 may extend along a longitudinal or clip axis 302 between a proximal or leading end 304 and a distal or following end 306.

In at least one example embodiment, the clip 208 is manufactured by stamping a metal sheet and then forming the metal sheet into the clip 208. Accordingly, the clip 208 may include one or more gaps or spaces that result from the forming, such as adjacent to folded portions of the clip 208. In at least one example embodiment, the clip 208 is formed from or includes steel.

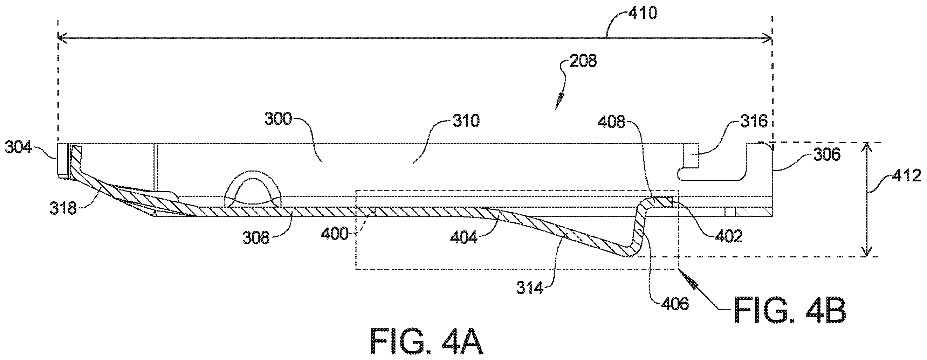

The body 300 of the clip 208 includes a base, bottom, or central wall 308 and a pair of opposing side walls 310. The side walls 310 may extend substantially parallel to one another and substantially perpendicular to the bottom wall 308. The bottom wall 308 defines an opening 312. The clip 208 further includes a flexible tab 314. The flexible tab 314 may extend at least partially into the opening 312. The flexible tab 314 will be described in greater detail below in the discussion accompanying FIGS. 4A-4B.

The clip 208 includes one or more stop tabs or wings 316. In at least one example embodiment, the clip 208 includes two wings 316 that are located at a common position along the clip axis 302. The wings 316 may extend from the side walls 310. In at least the example embodiment shown, the wings 316 extend directly from the side walls 310, respectively.

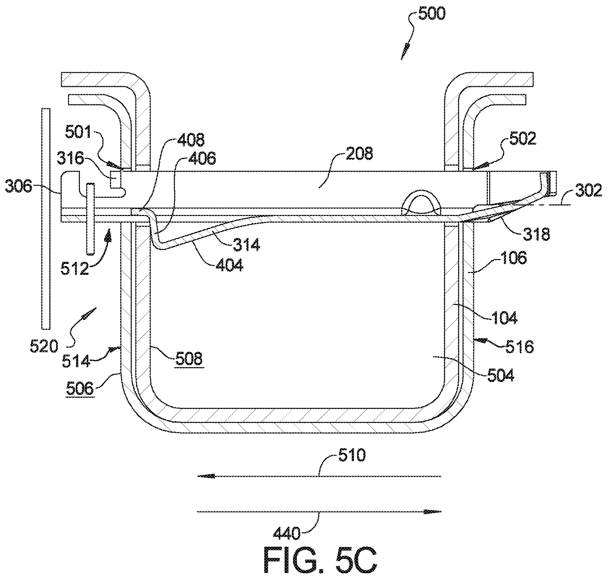

As will be described in greater detail below, the wings 316 are configured to engage the carrier bracket 106 (shown in FIG. 2) when the clip 208 is in the installed position (shown in FIG. 5C). Specifically, a contact surface 317 (e.g., largest surface) of each of the wings 316 may be configured to directly engage the carrier bracket 106. In at least one example embodiment, the wings 316 extend substantially parallel to one another. The wings 316 may extend substantially perpendicular to the side walls 310.

The body 300 includes a tapered nose 318. The tapered nose 318 defines a tapered height and/or a tapered width along the clip axis 302 toward the proximal end 304. As used herein, "tapered" means that the nose decreases in height and/or width in a direction defined from the distal end 306 to the proximal end 304 and parallel to the clip axis 302. The shape of the nose 318 may facilitate ease of insertion of the clip 208 into aligned first and second apertures 204, 206 (shown in FIG. 2) of the panel and carrier brackets 104, 106 (shown in FIG. 2), respectively.

In at least one example embodiment, the body 300 includes one or more gussets for increased strength. For example, the body 300 may include a first gusset 320 between the bottom wall 308 and tapered nose 318. The body 300 may further include second gussets 322 between the bottom wall 308 and each of the side walls 310, respectively.

FIG. 4A is a sectional view of the clip of FIGS. 3A-3B according to at least one example embodiment.

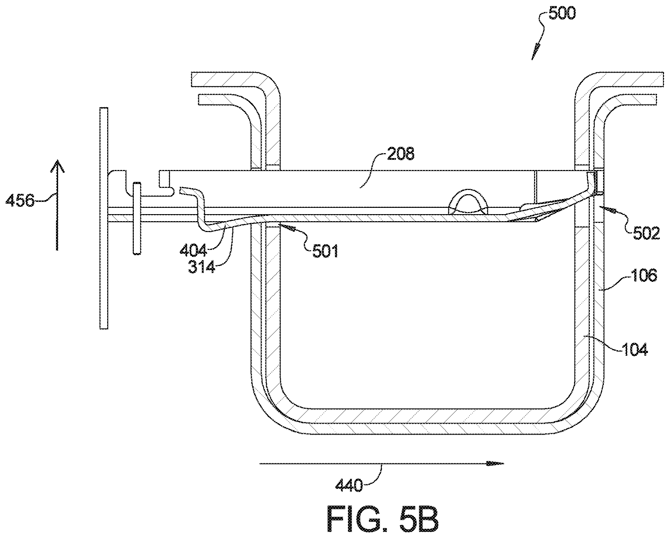

With reference to FIG. 4A, the flexible tab 314 includes a fixed end 400 and a free end 402. The flexible tab 314 extends from the body 300 at the fixed end 400. The flexible tab 314 is configured to pivot between a relaxed position, as shown, and a flexed position (see, e.g., FIG. 5B) during installation and removal.

The flexible tab 314 generally includes a ramp wall 404 and a stop wall 406. The ramp wall 404 may extend along the clip axis 302 between the fixed end 400 and the stop wall 406. In at least one example embodiment, the flexible tab 314 further includes a flange or access wall 408. The stop wall 406 may be longitudinally between (i.e., along the clip axis 302) the ramp wall 404 and the flange 408. The flange 408 may be longitudinally between the stop wall 406 and the free end 402.

The clip 208 defines a clip length 410 parallel to the clip axis 302 (shown in FIG. 3A). The clip 208 defines a clip height 412 perpendicular to the clip axis 302. The clip length 410 is longer than the clip height 412.

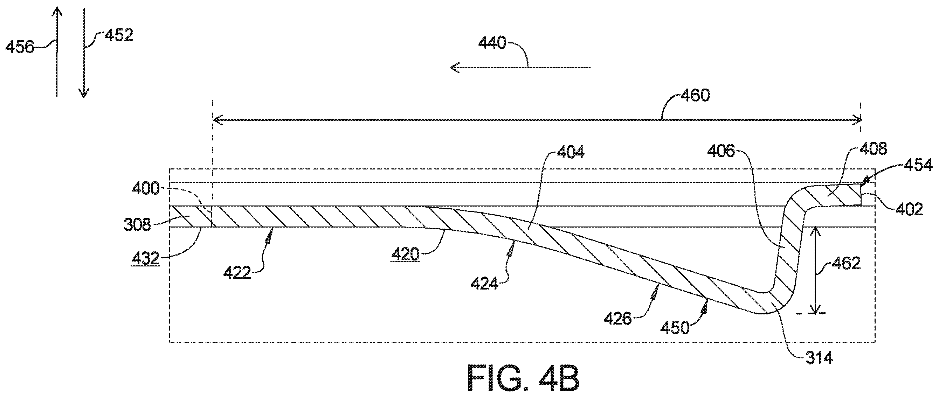

FIG 4B is a detail sectional view of a flexible tab of the clip of FIG. 4A.

In at least one example embodiment, as shown in FIG. 4B, the ramp wall 404 includes a contact surface 420. The contact surface 420 is configured to slide along the panel and/or carrier bracket 104, 106 (shown in FIG. 2) during installation of the clip 208. The contact surface 420 is nonplanar such that it does not extend only along a single plane (e.g., includes a curved portion and/or multiple different planes). In at least one example embodiment, at least a portion of the contact surface 420 is curved such that it is convex as viewed from an outside of the clip 208.

In at least one example embodiment, the contact surface 420 includes a first or leading surface portion 422, a second or intermediate surface portion 424, and a third or following surface portion 426. The intermediate surface portion 424 is longitudinally between (i.e., along the clip axis 302) the leading and following surface portions 422, 426. In at least one example embodiment, the intermediate surface portion 424 is curved. In at least one example embodiment, the intermediate surface portion 424 is a curved surface portion directly between two planar surface portions (e.g., the leading and following surface portions 422, 426).

In at least one example embodiment, the leading surface portion 422 is planar. The leading surface portion 422 defines a first slope or angle with respect to a bottom surface 432 of the bottom wall 308 when the flexible tab 314 is in the relaxed position. The first angle may be about 0° such that the leading surface portion 422 is substantially parallel to the bottom surface 432. In at least one example embodiment, the leading surface portion 422 is a planar surface portion directly between the fixed end 400 of the flexible tab 314 and a beginning of a curved surface portion (e.g., the intermediate surface portion 424).

In at least one example embodiment, the following surface portion 426 is planar. The following surface portion 426 defines a second slope or angle with respect to the bottom surface 432 of the bottom wall 308. The second angle may be different from the first angle. In at least one example embodiment, the second angle is greater than the first angle. In at least one example embodiment, the following surface portion 426 is directly between a curved surface portion (e.g., the intermediate surface portion 424) and the free end 402 of the flexible tab 314.

During installation, the clip 208 is moved in a first or installation direction 440 parallel to the clip axis 302. Thus, as will be described in greater detail below, during installation, the leading surface portion 422 (e.g., planar portion defining the smaller first angle), then the intermediate surface portion 424 (e.g., curved), and then the following surface portion 426 (e.g., planar portion defining the larger second angle) sequentially contact the aligned carrier brackets 104, 106 (shown in FIG. 2). A shape of the flexible tab 314 (e.g., the angles of the leading and following surface portions 422, 426 and the curvature of the intermediate surface portion 424) may facilitate a reduced insertion force compared to a tab with a continuously planar/linear ramp. Moreover, a height of the flexible tab 314 may also contribute to a lower insertion force compared to other clip designs. Accordingly, the clip 208 may be installed without use of a separate tool.

In at least one example embodiment, in the relaxed position, the flexible tab 314 extends on both opposing sides of the bottom wall 308. A first tab portion 450 may extend in a second direction 452 or below the bottom wall. In at least one example embodiment, the first tab portion 450 includes the ramp wall 404 and a portion of the stop wall 406.

In at least one example embodiment, a second tab portion 454 may extend in a third direction 456 or above the bottom wall 308. The third direction 456 is opposite the second direction 452. In at least one example embodiment, the second tab portion 454 includes the flange 408. The second tab portion 454 may include a portion of the stop wall 406. The shape of the flexible tab 314 may facilitate accessibility of the flexible tab 314 when the clip 208 is in an installed position, and non-destructive removal of the clip 208 form the installed position, as will be described in greater detail below in the discussion accompanying FIG. 5C. In at least one example embodiment, the side walls 310 extend in the second direction from the bottom wall 308.

In at least one example embodiment, the flexible tab 314 defines a tab length 460. The tab length 460 is shorter than the clip length 410. In at least one example embodiment, the tab length 460 is greater than or equal to about 25% of the clip length 410 (e.g., greater than or equal to about 30%, greater than or equal to about 35%, greater than or equal to about 40%, greater than or equal to about 45%, greater than or equal to about 50%, greater than or equal to about 55%, or greater than or equal to about 60%). The tab length 460 may be less than or equal to about 65% of the clip length 410 (e.g., less than or equal to about 60%, less than or equal to about 55%, less than or equal to about 50%, less than or equal to about 45%, less than or equal to about 40%, less than or equal to about 35%, or less than or equal to about 30%).

In at least one example embodiment, the flexible tab 314 defines a projected tab height 462. The projected tab height 462 is defined as a distance the flexible tab 314 extends in the second direction 452 beyond the bottom wall 308. In at least one example embodiment, the projected tab height 462 is greater than or equal to about 25% of the clip height 412 (e.g., greater than or equal to about 30%, greater than or equal to about 35%, greater than or equal to about 40%, or greater than or equal to about 45%). The projected tab height 462 may be less than or equal to about 50% of the clip height 412 (e.g., less than or equal to about 45%, greater than or equal to about 40%, greater than or equal to about 35%, or greater than or equal to about 30%).

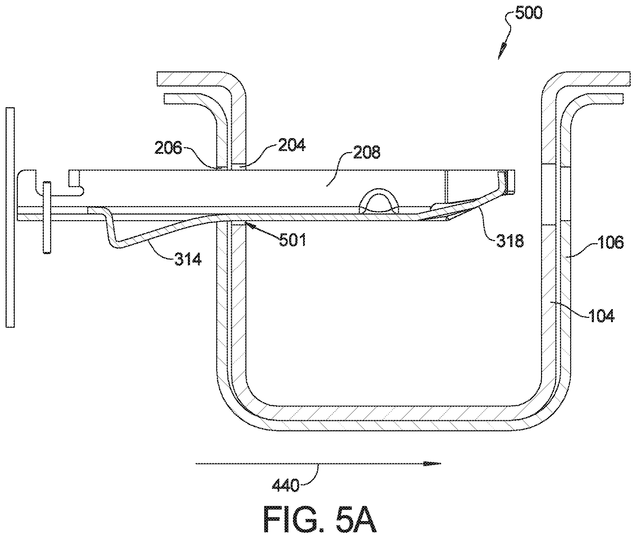

FIGS. 5A-5C are sectional views of a mounting assembly showing different stages of installation of the clip of FIGS. 3A-3B according to at least one example embodiment.

FIG. 5A shows the clip in a pre-installed position.

A mounting assembly 500 generally includes the panel bracket 104, the carrier bracket 106, and the clip 208. At a beginning of an installation process, the first apertures 204 of the panel bracket 104 are aligned with the second apertures 206 of the carrier bracket 106. The clip 208 is translated in the installation direction 440 toward the aligned apertures 204, 206. The nose 318 of the clip 208 enters a first pair of aligned apertures 502 during installation.

In at least one example embodiment, the nose 318 translates freely through the apertures 204, 206 (e.g., without the application of substantial force and/or engagement by a locking mechanism). The flexible tab 314 remains in the relaxed position as the leading end 304 and nose 318 of the clip 208 translate through a first pair of apertures 501.

FIG. 5B shows the clip in an intermediate position.

As the clip 208 is translated in the installation direction 440, the ramp wall 404 passes through the first pair of aligned apertures 501. The contact surface 420 of the ramp wall 404 may engage the panel and/or carrier bracket 104, 106 to receive a force in the third direction 456 that pivots and/or deforms the flexible tab 314 from the relaxed position toward the flexed position.

The flexible tab 314 is shown in a partially flexed position in FIG. 5B. However, the flexible tab 314 moves through a fully flexed position during installation (e.g., between FIGS. 5B and 5C). In the fully flexed position, the contact surface 460 is substantially aligned with the bottom wall 308, such as when the following surface portion 426 of the flexible tab 314 engages surface(s) defining the first pair of apertures 501. Flexure and/or deformation of the flexible tab 314 from the relaxed position, through partially flexed positions, and to the fully flexed position may be fully elastic such that the flexible tab 314 automatically returns to the relaxed position absent the force.

As discussed above, the differing slopes of the leading and following surface portions 422, 426 and/or the curvature of the intermediate surface portion 424 facilitate lower insertion force compared to a flexible tab with a planar ramp. Specifically, a point of contact of the flexible tab 314 with the surfaces of the first pair of aligned apertures 501 is closer to the following end 306 of the clip 208 than it would be for a flexible tab including a planar ramp. Accordingly, a height of the ramp wall 404 at a point of contact is increased to increase a lever arm length and reduce force to move the flexible tab 314 from the relaxed position to the flexed position. In at least one example embodiment, the clip 208 is configured to have an insertion force of less than or equal to about 75 Newtons (N) (e.g., less than or equal to about 70 N, less than or equal to about 65 N, less than or equal to about 60 N, less than or equal to about 55 N, or less than or equal to about 50 N).

As the clip 208 is translated in the installation direction 440, the nose 318 of the clip 208 enters a second pair of aligned apertures 502. The nose 318 translates freely through the second pair of aligned apertures 502 (e.g., without the application of substantial force and/or engagement by a locking mechanism).

FIG. 5C shows the clip in an installed position.

During continued translation of the clip 208 in the installation direction 440, the ramp wall 404 slides along the surfaces of the pair of aligned apertures 501 until the ramp wall 404 clears the surfaces and is in an inside 504 of the mounting assembly 500. When the ramp wall 404 clears the surfaces, the flexible tab 314 automatically returns to the relaxed position. The flexible tab 314 can be elastically moved between the relaxed position and the flexed position repeatedly without permanent deformation.

In the installed position, as shown in FIG. 5C, the flexible tab 314 is in the relaxed position with the ramp wall 404 and the stop wall 406 in the inside 504 of the mounting assembly 500. The clip 208 extends through both of the first and second pairs of aligned apertures 501, 502. A first portion of the clip 208 adjacent to the leading end 304 (shown in FIG. 3) extends outside of the mounting assembly 500. A second portion of the clip 208 is in the inside 504 of the mounting assembly 500. A third portion of the clip 208 adjacent to the following end 306 extends outside of the mounting assembly 500.

The wings 316 of the clip 208 are configured to contact an outside surface 506 of the carrier bracket 106 to reduce or prevent movement of the clip 208 in the installation direction 440 with respect to the panel and carrier brackets 104, 106. The wings 316 may be disposed at a predetermined location along the clip axis 302 based on a size and shape of the panel and carrier brackets 104, 106. The predetermined location may correspond to a fully installed position. The stop wall 406 of the flexible tab 314 is configured to engage an inner surface 508 of the panel bracket 104 to reduce or prevent movement of the clip 208 in a fourth or removal direction 510 opposite the installation direction 440. As used herein, "fully installed" means that the stop wall 406 is within the inside 504 of the mounting assembly 500 and the flexible tab 314 is in the relaxed position. The wings 316 may engage the outside surface 506 of the carrier bracket 106 and/or the stop wall 406 may engage the inner surface 508 of the panel bracket 104.

In the fully installed position, a portion of the panel bracket 104 and a portion of the carrier bracket 106 are sandwiched between the stop wall 406 and the wings 316. The portion of the panel bracket 104 may be directly between (i.e., without intervening elements) the carrier bracket 106 and the stop wall 406 with the stop wall 406 being configured to directly engage the carrier bracket 106. The portion of the carrier bracket 106 may be directly between the panel bracket 104 and the wings 316 with the wings 316 being configured to directly engage the carrier bracket.

In at least one example embodiment, the wings 316 and the flexible tab 314 cooperate to form a locking mechanism 512 that is closer to the following end 306 of the clip 208 than the leading end 304 of the clip 208. The leading end 304 of the clip 208 may be free of a locking mechanism. The locking mechanism 512 engages only a first side 514 of the assembled brackets 104, 106. A second side 516 of the assembled brackets 104, 106 is free from direct engagement by a locking mechanism. Accordingly, installation of the clip 208 requires applying the force to the flexible tab 314 only a single time (i.e., when passing through the first pair of apertures 501) on the first side 514 of the aligned brackets 104, 106.

When the clip 208 is in the installed position, the flexible tab 314 remains accessible from an outside 520 of the mounting assembly 500. For example the flange 408 of the flexible tab 314 is accessible from and/or extends at least partially outside of the first pair of aligned apertures 501. Thus, an operator can move the flexible tab 314 from the relaxed position to the flexed position to facilitate removal of the clip 208 from the panel and carrier brackets 104, 106. The clip 208 may then be reinstalled and/or reused.

Example embodiments are provided so that this disclosure will be thorough, and will fully convey the scope to those who are skilled in the art. Numerous specific details are set forth such as examples of specific compositions, components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, elements, compositions, steps, integers, operations, and/or components, but do not preclude the presence or addition of one or more other features, integers, steps, operations, elements, components, and/or groups thereof. Although the open-ended term "comprising," is to be understood as a non-restrictive term used to describe and claim various embodiments set forth herein, in certain aspects, the term may alternatively be understood to instead be a more limiting and restrictive term, such as "consisting of" or "consisting essentially of." Thus, for any given embodiment reciting compositions, materials, components, elements, features, integers, operations, and/or process steps, the present disclosure also specifically includes embodiments consisting of, or consisting essentially of, such recited compositions, materials, components, elements, features, integers, operations, and/or process steps. In the case of "consisting of," the alternative embodiment excludes any additional compositions, materials, components, elements, features, integers, operations, and/or process steps, while in the case of "consisting essentially of," any additional compositions, materials, components, elements, features, integers, operations, and/or process steps that materially affect the basic and novel characteristics are excluded from such an embodiment, but any compositions, materials, components, elements, features, integers, operations, and/or process steps that do not materially affect the basic and novel characteristics can be included in the embodiment.

Any method steps, processes, and operations described herein are not to be construed as necessarily requiring their performance in the particular order discussed or illustrated, unless specifically identified as an order of performance. It is also to be understood that additional or alternative steps may be employed, unless otherwise indicated.

When a component, element, or layer is referred to as being "on," "engaged to," "connected to," or "coupled to" another element or layer, it may be directly on, engaged, connected, or coupled to the other component, element, or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various steps, elements, components, regions, layers and/or sections, these steps, elements, components, regions, layers and/or sections should not be limited by these terms, unless otherwise indicated. These terms may be only used to distinguish one step, element, component, region, layer or section from another step, element, component, region, layer, or section. Terms such as "first," "second," and other numerical terms when used herein do not imply a sequence or order unless clearly indicated by the context. Thus, a first step, element, component, region, layer, or section discussed below could be termed a second step, element, component, region, layer or section without departing from the teachings of the example embodiments.

Spatially or temporally relative terms, such as "before," "after," "inner," "outer," "beneath," "below," "lower," "above," "upper," and the like, may be used herein for ease of description to describe one element or feature's relationship to another element(s) or feature(s) as illustrated in the figures. Spatially or temporally relative terms may be intended to encompass different orientations of the device or system in use or operation in addition to the orientation depicted in the figures.

Throughout this disclosure, the numerical values represent approximate measures or limits to ranges to encompass minor deviations from the given values and embodiments having about the value mentioned as well as those having exactly the value mentioned. Other than in the working examples provided at the end of the detailed description, all numerical values of parameters (e.g., of quantities or conditions) in this specification, including the appended claims, are to be understood as being modified in all instances by the term "about" whether or not "about" actually appears before the numerical value. "About" indicates that the stated numerical value allows some slight imprecision (with some approach to exactness in the value; approximately or reasonably close to the value; nearly). If the imprecision provided by "about" is not otherwise understood in the art with this ordinary meaning, then "about" as used herein indicates at least variations that may arise from ordinary methods of measuring and using such parameters. For example, "about" may comprise a variation of less than or equal to 5%, optionally less than or equal to 4%, optionally less than or equal to 3%, optionally less than or equal to 2%, optionally less than or equal to 1%, optionally less than or equal to 0.5%, and in certain aspects, optionally less than or equal to 0.1%. In addition, disclosure of ranges includes disclosure of all values and further divided ranges within the entire range, including endpoints and sub-ranges given for the ranges.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A clip for a mounting assembly of a solar panel, the clip comprising:
an elongated body; and
a flexible tab extending from the elongated body, the flexible tab configured to elastically deform from a relaxed position to a flexed position in response to a force, and the flexible tab configured to automatically return to the relaxed position absent the force.

2. The clip of claim 1, wherein the elongated body includes:
a central wall defining an opening, the flexible tab extending at least partially into the opening,
a pair of side walls extending from opposite sides of the central wall, and
a pair of stops tabs extending from the pair of side walls, respectively.

3. The clip of claim 2, wherein
each side wall of the pair of side walls extends perpendicular to the central wall, and
the stop tabs extend perpendicular to the one of the side walls.

4. The clip of any one of claims 2 to 3, wherein
the flexible tab is configured to pivot in a first direction from the relaxed position to the flexed position in response to the force,
in the relaxed position, the clip defines a height parallel to the first direction,
in the relaxed position, the flexible tab extends a distance beyond the central wall in a second direction opposite the first direction, and
the distance is greater than or equal to 30% of the height.

5. The clip of any one of claims 2 to 4, wherein in the relaxed position, a first portion of the flexible tab is disposed in the first direction with respect to the central wall and a second portion of the flexible tab is disposed in a second direction with respect to the central wall, the second direction being opposite the first direction.

6. The clip of any one of the preceding claims, wherein the flexible tab includes a stop wall configured to engage a bracket of the mounting assembly to prevent movement of the clip in a direction parallel to a longitudinal axis of the clip.

7. The clip of claim 6, wherein
the flexible tab extends between a fixed end and a free end,
the flexible tab further includes a ramp wall and a flange,
the flange is between the stop wall and the free end along the longitudinal axis,
the ramp wall is between the fixed end and the stop wall along the longitudinal axis, and
the stop wall is between the ramp wall and the flange along the longitudinal axis.

8. The clip of claim 7, wherein
the ramp wall includes a contact surface configured to slide along the bracket of the mounting assembly, and
the contact surface is nonplanar.

9. The clip of claim 8, wherein at least a portion of the contact surface of the ramp wall is curved.

10. The clip of claim 8 or 9, wherein
the contact surface includes a first portion defining a first slope with respect to the longitudinal axis when the flexible tab is in the relaxed position,
the contact surface includes a second portion defining a second slope with respect to the longitudinal axis when the flexible tab is in the relaxed position, and
the second slope is different than the first slope.

11. The clip of any one of the preceding claims, wherein
- the clip has a single-piece, unitary structure and comprises steel, and/or wherein
- the elongated body defines a tapered nose, and/or wherein
- the clip defines a first length parallel to a longitudinal axis of the clip, the flexible tab defines a second length parallel to the longitudinal axis, and the second length is greater than or equal to 35% of the first length.

12. A mounting assembly for a solar panel, the mounting assembly comprising:
a first bracket configured to be coupled to a solar panel, the first bracket including a first pair of side walls defining a pair of first apertures, respectively;
a second bracket configured to be coupled to a field assembly, the second bracket including a second pair of side walls defining a pair of second apertures, respectively, the second pair of side walls at least partially defining an interior bracket region in which the first bracket is at least partially disposed; and
the clip of any one of the preceding claims, the clip extending through the pair of first apertures and the pair of second apertures to couple the first bracket to the second bracket, wherein
at least a portion of the flexible tab is disposed in the interior bracket region, and
the flexible tab is configured to engage the first bracket to prevent movement of the clip with respect to the first bracket and the second bracket.

13. The mounting assembly of claim 12, wherein
- a first side wall of the first pair of side walls is directly between the flexible tab and a second side wall of the second pair of side walls, and the second side wall is directly between the first side wall and a stop tab of the clip, and/or wherein
- the flexible tab includes a flange, and the flange is accessible from an exterior of the mounting assembly.

14. A method of assembling a mounting assembly for a solar panel, particularly a mounting assembly of claim 12 or 13, the method comprising:
aligning a pair of first apertures of a first bracket with a pair of second apertures of a second bracket, the first bracket at least partially inside the second bracket; and
translating a clip in a first direction such that an elongated body of the clip extends through the pair of first apertures and the pair of second apertures, wherein the translating causes a flexible tab of the clip to pivot from a relaxed position to a flexed position, and automatically return to the relaxed position when the clip is in an installed position.

15. The method of claim 14, wherein the translating is performed by applying a force to the clip in the first direction, the force being less than or equal to 55 Newtons.
